Europäisches Patentamt

European Patent Office

Office européen des brevets

(19)

(11) Veröffentlichungsnummer: **0 230 935 B1**

(12) **EUROPÄISCHE PATENTSCHRIFT**

(45) Veröffentlichungstag der Patentschrift:
14.11.90

(51) Int. Cl.⁵: **A22C 11/02, A22C 7/00**

(21) Anmeldenummer: 87100560.9

(22) Anmeldetag: 16.01.87

(54) **Maschine zum Füllen von Behältern oder Därmen mit Wurstbrät.**

(30) Priorität: 17.01.86 DE 3601313

(43) Veröffentlichungstag der Anmeldung:
05.08.87 Patentblatt 87/32

(45) Bekanntmachung des Hinweises auf die Patenterteilung:
14.11.90 Patentblatt 90/46

(84) Benannte Vertragsstaaten:
AT BE CH DE ES FR GB GR IT LI LU NL SE

(56) Entgegenhaltungen:
EP-A- 0 129 703
AU-A- 406 697
CH-A- 182 033
DE-C- 267 290
DE-C- 424 782
FR-A- 1 299 086
US-A- 3 251 579
US-A- 3 424 294
US-A- 3 450 180

(73) Patentinhaber: ALBERT HANDTMANN Maschinenfabrik GmbH & Co. KG, Postfach 1456, D-7950 Biberach a.d. Riss 1(DE)

(72) Erfinder: Abt, Franz, Beethovenweg 14, D-7957 Schemmerhofen(DE)
Erfinder: Kern, Manfred, Manlichstrasse 13, D-7951 Ummendorf(DE)
Erfinder: Klingele, Robert, Sachsenring 93, D-7950 Ringschnait(DE)
Erfinder: Staudenrausch, Georg, Magnolienweg 3, D-7950 Rissegg(DE)

(74) Vertreter: Patentanwälte Grünecker, Kinkeldey, Stockmair & Partner, Maximilianstrasse 58, D-8000 München 22(DE)

## Beschreibung

Die Erfindung betrifft eine Maschine zum Füllen von Behältern oder Därmen mit Wurstbrät, mit einem Hauptmaschinenteil, in dem eine Ausstoßeinrichtung angeordnet ist, mit einem auf dem Hauptmaschinenteil angeordneten Vorratsbehälter und mit einem Transportorgan, das das Brät aus dem Vorratsbehälter zur Ausstoßeinrichtung fördert.

Bei derartigen Maschinen ist es bekannt und üblich, auf dem Maschinenhauptteil einen Vorratsbehälter, beispielsweise in der Art eines Trichters, vorzusehen, in den ein ausreichender Vorrat an Brät eingefüllt werden kann. Unten am Vorratsbehälter tritt das eingefüllte Brät aus und gelangt mit Hilfe eines Transportorgans zu einer Ausstoßeinrichtung, wo es beispielsweise in einen Darm oder einen Behälter entsprechend portioniert abgefüllt werden kann.

Um möglichst lang und viel Brät ohne Arbeitsunterbrechung abfüllen zu können ist es wünschenswert, einen möglichst großen Vorrat an Brät in dem Vorratsbehälter unterbringen zu können. Deshalb ist ansich ein großvolumiger Vorratsbehälter wünschenswert, andererseits nimmt aber mit steigendem Behältervolumen zwangsläufig die Behälterhöhe zu. Je höher der Vorratsbehälter ist um so schwieriger ist es aber,den Vorratsbehälter von Hand zu befüllen oder beispielsweise zu reinigen.

Industriemaschinen werden deshalb meistens mit einer Beschickungseinrichtung ausgerüstet, mit welcher geeignete Brätwagen zum Beschicken der Füllmaschinen eingesetzt werden. Kleinere Betriebe, z.B. Handwerksbetriebe, befüllen die Vorratsbehälter üblicherweise von Hand.

Man hat sich daher in der Praxis bei solchen Maschinen bisher damit begnügt, den Vorratsbehälter nur so hoch zu bauen, daß dessen Befüllen von Hand ohne größere Schwierigkeiten möglich war und hat, um dies zu erreichen, relativ kleine Volumina in Kauf genommen.

Die relativ geringe Bauhöhe bekannter Vorratsbehälter macht es jedoch dann außerdem erforderlich, daß die Behälter nach oben zumindest durch ein Gitter oder dergleichen abgedeckt werden müssen, um den einschlägigen Unfallverhütungsvorschriften Rechnung zu tragen. Diese Vorschriften schreiben vor, daß es beim Betrieb der Maschine nicht möglich sein darf, daß eine Bedienungsperson mit ihren Armen durch den Trichter hindurch im Betrieb der Maschine bis zum Transportorgan fassen kann, um Betriebsunfälle sicher zu verhindern.

Man hat deshalb im Stand der Technik ein Gitter auf den Vorratsbehälter gelegt, dessen Gitteröffnungen so klein waren, daß es nicht möglich war, mit der Hand hindurch zu fassen.

Bei dieser bekannten Maschine war daher einmal das Fassungsvermögen des Vorratsbehälters nicht besonders groß, zum anderen war aber auch das Befüllen des Vorratsbehälters durch das Gitter hindurch nicht möglich. Zum Befüllen muß das Gitter weggenommen oder weggeschwenkt werden. Mit der Wegnahme oder dem Wegschwenken des Gitters erfolgte gleichzeitig durch einen Endschalter ein Abschalten des Antriebsmotors der Maschine.

Ein weiterer Nachteil dieser bekannten Maschine liegt darin, daß das praktisch verwirklichbare Einfüllvolumen kleiner gehalten werden muß, als das eigentliche Trichtervolumen. Dies hat seine Ursache darin, daß beim vollständigen Füllen des Trichters die Gefahr besteht, daß Brätmasse über den Trichterrand geschoben wird. Bei diesen Fülltrichtern ist es nämlich üblich, das Brät mit Hilfe eines im Trichter angeordneten Förderorgans zur Auslaufseite zu fördern. Da das Förderorgan aufgrund der sonst erforderlichen großen Drehmomente im allgemeinen sich nicht über die volle Trichterhöhe erstreckt, wird zur Vermeidung von Brückenbildungen ein an der Trichterwand rotierender Drehschieber durch das Förderorgan bewegt, der sich bildende Brücken in der Rohwurst zerstört und damit sicherstellt, daß die ganze Masse zum Auslauf hin gefördert werden kann. Dieser Drehschieber würde in Fällen, in denen der Trichter vollständig gefüllt wäre, dazu führen, daß ein Teil der eingefüllten Masse angehoben und damit über den Rand treten könnte.

Aus der FR-C 1 299 086 ist ebenfalls eine Maschine zum Füllen von Behältern oder Därmen mit Wurstbrät nach dem Oberbegriff des Anspruchs 1 bekannt. Der dort gezeigte Vorratsbehälter ist mit einem Deckel verschließbar, der in geöffnetem Zustand einen Sicherheitsschalter unterbricht, so daß die Maschine automatisch stillgesetzt wird. Zum Befüllen muß der Deckel abgenommen werden. In geschlossenem Zustand ist ein Nachfüllen nicht möglich. Der Deckel erlaubt auch keine Volumenvergrößerung des Vorratsbehälters.

Der Erfindung liegt die Aufgabe zugrunde, eine Maschine der eingangs genannten Art zu schaffen, die einfach befüllbar ist, die einschlägigen Sicherheitsbestimmungen erfüllt und dennoch ein großes Vorratsvolumen für die abzufüllende Brätmasse zur Verfügung stellt.

Gelöst wird diese Aufgabe mit einer Maschine nach dem Oberbegriff des Anspruchs 1 dadurch, daß die Vorratsbehälterwand im oberen Teil des Vorratsbehälters von einem wegschwenkbaren Wandteil gebildet wird, wobei eine tieferliegende Befüllkante entsteht.

Durch diese Maßnahme wird zunächst erreicht, daß ein Vorratsbehälter verwendet werden kann, der großvolumig ist und daher relativ hoch gebaut. Dabei kann die gesamte Bauhöhe des Vorratsbehälters so gewählt werden, daß selbst dann, wenn eine Bedienungsperson im Betrieb der Maschine über den oberen Rand des Vorratsbehälters greift, nicht bis zum Transportorgan fassen kann. Es ist somit möglich, die Sicherheitsvorschriften ohne Gitter oder anders geartete Abdeckung des Vorratsbehälters sicherzustellen. Die einfache Befüllmöglichkeit wird dadurch sichergestellt, daß webigstens ein Teil der Behälterwand im oberen Teil des Vorratsbehälters wegschwenkbar ist. Durch das Wegschwenken eines solchen Wandteils entsteht eine Öffnung und damit eine Befüllkante, die tiefer liegt als die Vorratsbehälteroberkante. Nach dem Wegschwenken des Wandteils ist es somit möglich, die überwiegende Masse des abzufüllenden Brätes über diese tieferliegende Füllkante in den Vorratsbehälter einzufüllen. Wenn der Füllstand die Höhe der Abfüllkante erreicht hat, kann das zunächst weggeschwenkte Wandteil zum Verschließen der Öffnung herangeschwenkt werden, so daß die Vorratsbehälterwand dann umlaufend wieder bis zur Oberkante des Vorratsbehälters geschlossen ist. Die restliche Menge abzufüllenden Brätes kann dann noch zusätzlich über die Oberkante des Vorratsbehälters eingefüllt werden. Dabei ist zwar die zu überwindende Höhe größer, es handelt sich aber nur noch um geringere Mengen Brät, so daß hierfür keine außerordentliche Kraftanstrengung mehr nötig ist. Trotz einfacher Befüllmöglichkeit läßt sich somit das Volumen des Vorratsbehälters bedeutend vergrößern. Darüber hinaus besteht der bereits erwähnte Vorteil, daß die Vorratsbehälterwand oben offen bleiben kann, weil aufgrund der großen Bauhöhe selbst bei offenem Vorratsbehälter vom oberen Rand des Vorratsbehälters aus nicht bis zum Transportorgan gegriffen werden kann. Das hat zur Folge, daß der Vorratsbehälter dann auch ohne Stillsetzen des Transportorgans nachgefüllt werden kann.

Auch die Reinigung des Vorratsbehälters wird bei weggeschwenktem Wandteil vorgenommen, so daß auch hierfür der Vorratsbehälter ohne große Anstrengungen zugänglich ist.

In einer derzeit bevorzugten Ausführungsform der Erfindung ist der wegschwenkbare Wandteil als Aufsatz ausgebildet, der einen feststehenden Teil des Vorratsbehälters nach oben fortsetzt und gegenüber dem feststehenden Teil hochschwenkbar gelagert ist. Der Vorratsbehälter ist mit dieser Maßnahme in zwei aufeinanderliegendde Teile unterteilt, wobei der als Aufsatz ausgebildete obere Teil nach oben wegschwenkbar ist. Bei dieser Lösung ist also die gesamte Vorratsbehälterwand im oberen Teil des Vorratsbehälters hochschwenkbar. Dies führt dazu, daß bei hochgeschwenktem Aufsatz ringsum eine tieferliegende Befüllkante entsteht, so daß der Vorratsbehälter über einen großen Teil seines Umfangs frei zugänglich ist und bequem befüllt werden kann.

In weiterer Ausgestaltung der Erfindung ist vorgesehen, daß der feststehende Teil zumindest teilweise trichterförmig und der Aufsatz zylindrisch ausgebildet ist. Der Aufsatz setzt somit den als Trichter ausgebildeten feststehenden Teil des Vorratsbehalters mit einem Zylindermantel fort. Es wäre zwar auch denkbar, den Aufsatz so auszubilden, daß er den Trichter nach außen hin ebenfalls trichterförmig fortsetzt. Die zylindrische Ausbildung des Aufsatzes besitzt jedoch die Vorteile, daß im zylindrischen Teil kein Zuführorgan erforderlich ist, da die Schwerkraft der Brätmasse hierfür ausreicht. Außerdem ist das Reinigen des hochgeklappten zylindrischen Aufsatzes wesentlich günstiger. Darüber hinaus wird durch den Aufsatz und das dadurch erzielte große Trichtervolumen auch das Herausschieben von Brät beim Umlaufen eines Drehschiebers zur Vermeidung von Brückenbildung verhindert. Der trichterförmige Teil läßt sich daher bis zum Rand vollständig befüllen ohne daß die Gefahr des Übertritts vorhanden ist. Somit läßt sich das Trichtervolumen vollständig zum Füllen ausnützen, was bei den bekannten Vorratsbehältern aus den eingangs genannten Gründen nicht möglich war.

Der feststehende Teil kann nach oben hin ebenfalls in einem zylindrischen Ansatz enden. Dies bringt den Vorteil mit sich, daß die Befestigung der zum Hochschwenken des Aufsatzes benötigten Gelenke oder dergleichen an einer im wesentlichen aufrecht verlaufenden Wand angebracht werden können, was einfacher ist, als wenn dies an einer schräg zulaufenden Trichterwand geschehen muß.

In weiterer Ausgestaltung der Erfindung ist vorgesehen, daß der Aufsatz an dem feststehenden Teil über ein Einzelgelenk hochschwenkbar gelagert ist und daß die Aufsatzunterkante und die Oberkante des feststehenden Teils korrespondieren derart schräg verlaufen, daß die Sitzebene des Aufsatzes auf dem feststehenden Teil zum Gelenk hin ansteigt. Durch diese Maßnahme entsteht auf der dem Gelenk diametral gegenüberliegenden Seite eine Stelle, an der die Einfüllkante am tiefsten liegt. Zum Gelenk hin steigt die Füllkante dann an. Dieser ansteigende Teil schafft insbesondere beim Einfüllen von relativ zähen Brätmassen die Möglichkeit, nach Erreichen eines Füllstandes in Höhe der tiefsten Stelle der Einfüllkante noch weiteres Brät auf der Seite zuzufüllen, auf der das Gelenk angeordnet ist. Das Brät wird dort durch die ansteigenden Wände zusammengehalten. Da das Brät erst langsam zu der tiefsten Stelle vorfließt, kann der Vorratsbehälter somit von einer tiefgelegenen Einfüllkante her bereits auf einen Füllstand gefüllt werden, der über einer durch die tiefste Stelle der Einfüllkante verlaufenden Horizontalebene liegt.

Eine weitere vorteilhafte Ausgestaltung der Erfindung sieht vor, daß im Gelenk eine Freilaufrollkupplung vorhanden ist.

Eine solche Freilaufrollkupplung hat zur Folge, daß der Aufsatz frei hochgeschwenkt werden kann, wobei nur das Gewicht des Aufsatzes zu überwinden ist, daß aber andererseits die Gegenbewegung gebremst wird, so daß der Aufsatz in jeder Winkelstellung stehen bleibt. Mit relativ geringem Kraftaufwand kann dann der Aufsatz wieder abgesenkt werden, wobei nicht die Gefahr besteht, daß der Aufsatz von selbst ungewollt aus seiner hochgeschwenkten Stellung herabfällt. Außerdem wird dadurch ein weiches Aufsetzen des Aufsatzes auf seiner Sitzfläche möglich.

Eine weitere Ausgestaltung der Erfindung sieht vor, daß am Vorratsbehälter ein Sicherheitsschalter zum Abschalten des Antriebsmotors der Maschine beim Hochschwenken des Aufsatzes angeordnet ist. Durch diese Maßnahme wird sichergestellt, daß dann, wenn der Vorratsbehälter so zugänglich ist, daß die Bedienungsperson ansich bis zu dem Transportorgan fassen könnte, nämlich bei hochgeschwenktem Aufsatz, automatisch das Transportorgan stillgesetzt ist, so daß keine Verletzungsgefahr besteht.

In diesem Zusammenhang ist es dann weiterhin. von Vorteil, wenn der Sicherheitsschalter so angeordnet ist, daß er erst anspricht, wenn der beim Hochschwenken des Aufsatzes entstehende Öffnungsspalt größer als 5 bis 6 cm ist.

Mit anderen Worten bedeutet dies, daß durch diese Lösung der Aufsatz um einen kleinen Winkelbetrag hochgeschwenkt werden kann, ohne daß der Sicherheitsschalter anspricht. Dadurch entsteht ein Sichtspalt zwischen dem Aufsatz und dem feststehenden Teil des Vorratsbehälters - bei laufender Maschine - so daß die Bedienungsperson den noch vorhandenen Inhalt im Vorratsbehälter überprüfen kann. Der Sichtspalt ist so klein, daß eine Bedienungsperson nicht mit der Hand hindurchgreifen kann.

Die Erfindung wird im folgenden anhand der in den Zeichnungen dargestellten Ausführungsbeispiele weiter erläutert und beschrieben.

Figur 1 zeigt in Seitenansicht eine neuerungsgemäße Maschine,

Figur 2 zeigt eine Ansicht der Maschine in Pfeilrichtung II der Figur 1,

Figur 3 zeigt in einer Seitenansicht eine neuerungsgemäße Maschine gemäß einem zweiten Ausführungsbeispiel und

Figur 4 zeigt eine perspektivische Detaildarstellung des Bereiches D der Figur 3.

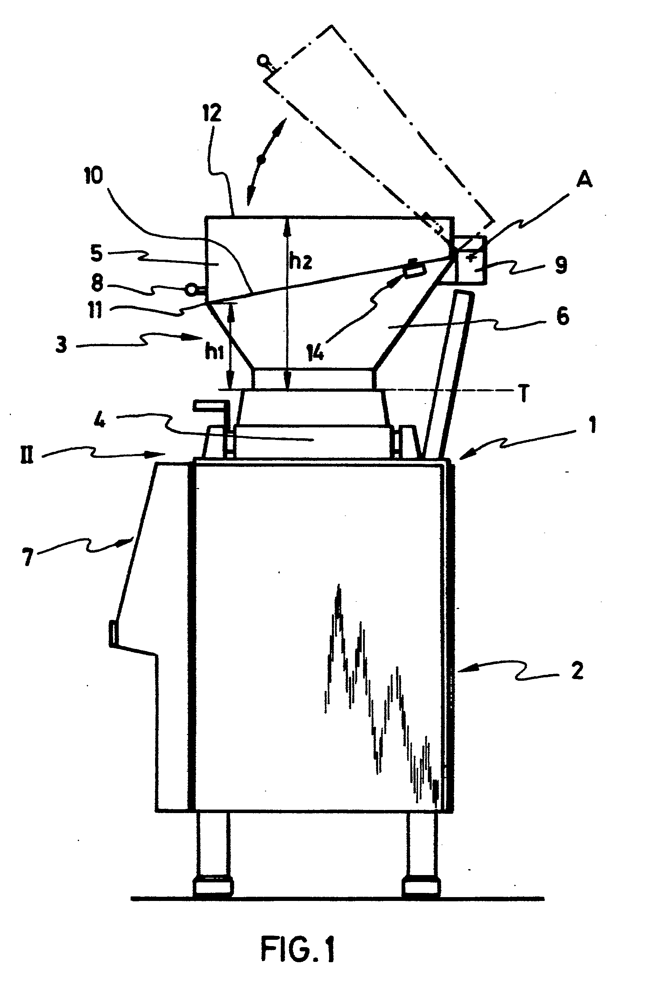

In Figur 1 ist die erfindungsgemäße Maschine insgesamt mit (1) bezeichnet. Die Maschine (1) dient zum Füllen von Behältern oder Därmen mit Wurstbrät. Sie weist ein Hauptmaschinenteil (2) oder auch Gestell auf, in dem die zum Abfüllen notwendigen, hier nicht näher zu erläuternden Maschinenelemente untergebracht sind. Über eine ebenfalls nur schematisch angedeutete Bedienungstafel (7) können die gewünschten Betriebsabläufe eingestellt und gesteuert werden.

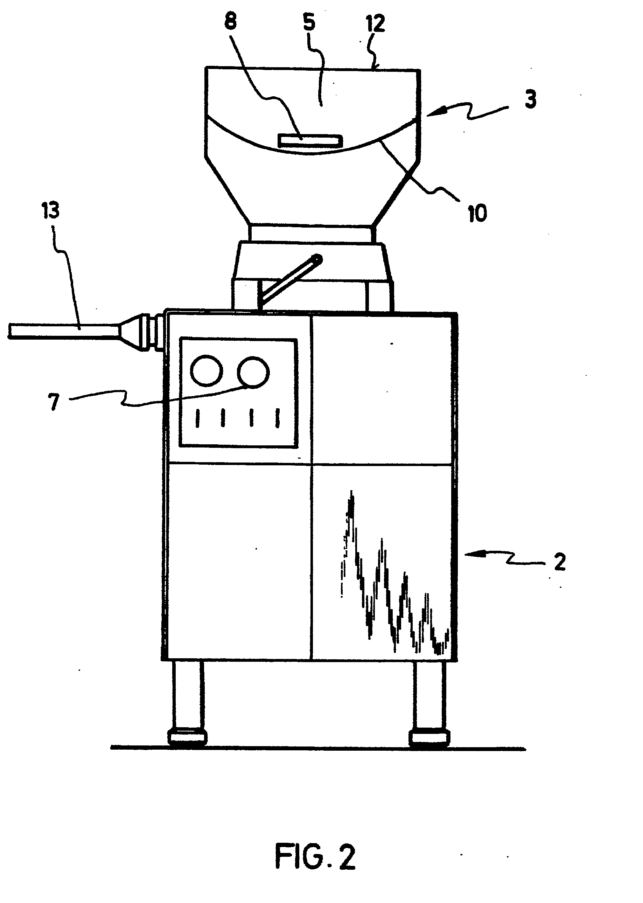

Auf dem Hauptmaschinenteil (2) ist ein Vorratsbehälter (3) angeordnet. In den Vorratsbehälter (3) wird das Wurstbrät eingefüllt. Am unteren Ende des Vorratsbehälters (3), etwa in der Ebene T wird das Brät mit Hilfe eines nicht näher dargestellten Transportorgans (4) entnommen und über Füllzylinder, Förderschnecken oder dergleichen der in Figur 2 dargestellten Abdrehtülle (13) zugeführt und dort in Därme oder Behälter abgefüllt.

Bei dem gezeigten Ausführungsbeispiel besteht der Vorratsbehälter (3) aus zwei Teilen, von denen der untere Teil (6) trichterförmig ausgebildet ist und fest auf dem Hauptmaschinenteil (2) ruht. Die trichterförmige Kontur des unteren Teils (6) wird nach oben hin von einem in diesem Ausführungsbeispiel zylindrischen Aufsatz (5) fortgesetzt, der ein Teil des Behältervolumens begrenzt und um ein Gelenk (9) schwenkbar gegenüber dem unteren oder feststehenden Teil (6) gelagert ist. Dieser Aufsatz (5) kann um die Achse (A) des Gelenkes (9) in die in Figur 1 strichpunktiert dargestellte Stellung hochgeschwenkt werden.

Die Sitzfläche (10), mit der der Aufsatz (5) auf dem feststehenden Teil ringsum aufliegt, verläuft zum Gelenk (9) hin ansteigend, d.h., die Unterkante des Aufsatzes (5) ist korrespondierend zur Oberkante des feststehenden Teils (6) schräg verlaufend ausgebildet.

Wie aus Figur 2 zu sehen ist, die eine Ansicht der Maschine in Pfeilrichtung II der Figur 1 zeigt, ist der Vorratsbehälter (3) so auf dem Maschinenhauptteil (2) angeordnet, daß der Aufsatz (5) mit Hilfe des Griffes (8) von der Bedienungsseite der Maschine her geöffnet werden kann. Die seitlich abstehende Abdrehtülle (13) der Maschine behindert somit den Befüllvorgang nicht.

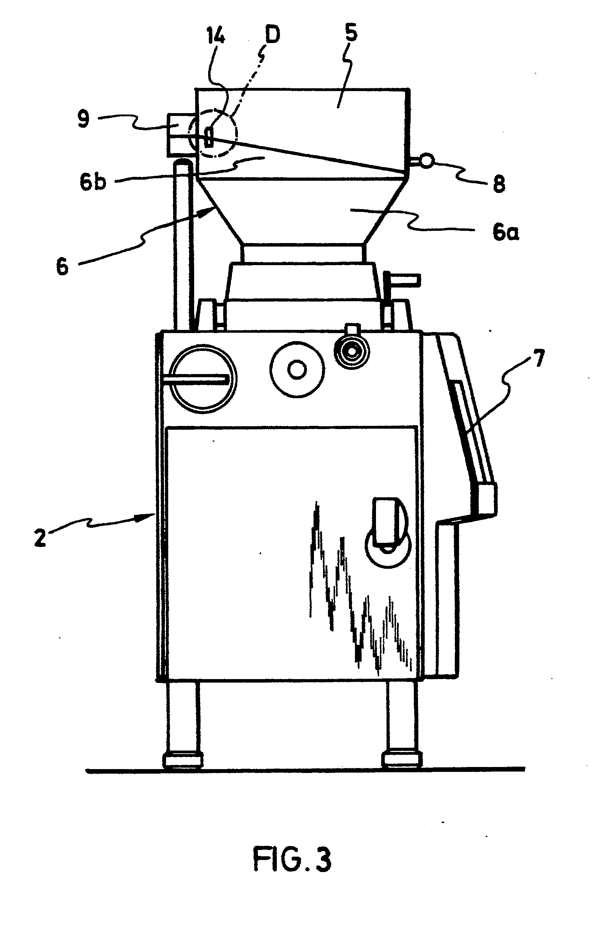

Die Ausführungsform gemäß Figur 3 unterscheidet sich von der Ausführungsform der Figuren 1 und 2 insofern, als daß der feststehende Teil (6) einen unteren trichterförmigen Wandteil (6a) aufweist, dessen Oberkante im wesentlichen horizontal verläuft. Einstückig mit diesem trichterförmigen Teil (6a) ist der sich nach oben hin anschließende zylindrische Ansatz (6b) ausgebildet, dessen Oberkante zum Gelenk (9) hin ähnlich wie in Figur 1 ansteigt.

Bei beiden Ausführungsbeispielen ist das Gelenk (9) mit einer Freilaufrollkupplung ausgestattet, die zwar ein freies Hochschwenken des Aufsatzes ermöglicht, wobei nur das Gewicht des Aufsatzes (5) zu überwinden ist, gleichzeitig aber die Gegenbewegung so abbremst, daß der Aufsatz (5) in jeder Winkelstellung stehen bleibt.

Freilaufrollkupplungen in dieser Art sind an sich bekannt und bedürfen daher hier keiner weiteren Beschreibung.

Ebenfalls beiden Ausführungsbeispielen gemeinsam ist ein insgesamt mit (14) bezeichneter Sicherheitsschalter, der die Abschaltung des Motors der Maschine, insbesondere des Transportorgans bewirkt, wenn der Aufsatz (5) gegenüber dem feststehenden Teil (6) um ein Maß hoch geschwenkt worden ist, welches es möglich machen würde, daß an der Stelle des größten Spaltes eine Bedienungsperson von Hand in das Innere des Vorratsbehälters (5) fassen könnte. Sobald sich ein solcher Schwenkwinkel eingestellt hat, schaltet der Sicherheitsschalter automatisch die Maschine ab.

Um dies zu erreichen, gibt es vielerlei mögliche Ausführungsformen.

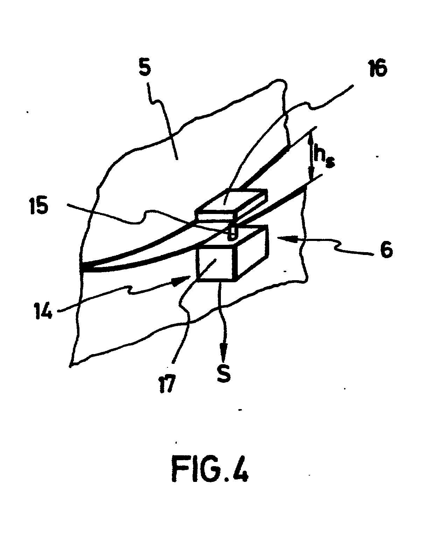

Dies läßt sich beispielsweise mit einem Sicherheitsschalter (14) erreichen, wie er detaillierter in Figur 4 gezeigt ist. Dieser Sicherheitsschalter (14) besteht aus einer fest mit dem Aufsatz (5) verbundenen Platte (16) und einem Schaltergehäuse (17), welches einerseits fest mit dem feststehenden Teil (6) des Vorratsbehälters verbunden ist. In dem Gehäuse (17) sitzt ein Schaltstift (15), der bei geschlossenem Vorratsbehälter den Stift (15) in das Gehäuse (17) gegen die Kraft einer nicht dargestellten Feder drückt. Wenn nun der Aufsatz (5) geöffnet wird, wird der Stift (15) mit Hilfe der Feder aus dem Griff (17) herausgedrückt. Sobald eine maximal zulässige Spaltöffnung $(h_S)$ entstanden ist, löst der Stift (15) mit Hilfe im Gehäuse (17) untergebrachter Kontakte ein Signal (S) aus, welches die Maschine dann abschaltet. Diese Höhe $(h_S)$ beträgt beispielsweise 6 cm und der Stelle der größten Spaltöffnung, so daß es zwar möglich ist, während des Betriebs der Maschine durch den Spalt in das Innere des Vorratsbehälters Einblick zu nehmen ohne daß die Maschine abschaltet. Andererseits wird immer dann, wenn die Spaltöffnung so groß wäre, daß eine Bedienungsperson von Hand hindurchfassen könnte, die Maschine dann automatisch abgeschaltet. Es ist klar, daß diese Funktion des Sicherheitsschalters durch andere mögliche Schalteranordnungen oder Schalterarten z.B. berührungslose herbeigeführt werden kann. Beispielsweise könnte der Sicherheitsschalter auch in das Gelenk (9) integriert sein.

Die Maschine läßt sich gemäß beiden Ausführungsformen wie folgt bedienen:

Wenn die Maschine in Betrieb genommen werden soll, muß zunächst Brät in den Vorratsbehälter (3) eingefüllt werden. Hierzu kann die Bedienungsperson von der Bedienungsseite, auf der die Schalttafel (7) angeordnet ist, den Griff (8) ergreifen und den Aufsatz (5) um die Achse (A) bzw. das Gelenk (9) frei hochschwenken, beispielsweise in die in Figur 1 angedeutete, strichpunktierte Stellung. Wenn dabei die Maschine bereits vorher in Betrieb war oder der Motor vorher angeschaltet worden ist, spricht der Sicherheitsschalter (14) an und schaltet den Motor wieder aus.

Über die tiefliegende Befüllkante (11) läßt sich dann der feststehende Teil (6) des Vorratsbehälters (3) zunächst bequem von der Bedienungsseite, auf der auch die Schalttafel (7) angeordnet ist, befüllen. Da der feststehende Teil auf der Befüllseite infolge des schrägen Verlaufs der Sitzebene (10) die geringste Tiefe hat, und zum Gelenk (9) hin ansteigt, ist es möglich, einigermaßen zähes Brät von der niederen Seite des feststehenden Teils her auch so einzufüllen, daß es im Bereich der höheren Kante, also auch im Bereich des Gelenkes (9) angehäuft werden kann. Dabei kann also bei hochgeschwenktem Aufsatz (5) ein Brätvolumen eingefüllt werden, welches bereits größer als das Volumen des feststehenden Teils (6) ist.

Nach dem Befüllen des feststehenden Teils (6) kann nun der Aufsatz (5), der in seiner geöffneten Stellung aufgrund der Freilaufrollkupplung ohne besondere Arretierung aber auch ohne Gefahr, daß er beim Befüllen herabfallen könnte, gehalten wird, durch Überwindung der Haltekraft der Freilaufrollkupplung nach unten geschwenkt werden, bis er im Bereich der Sitzebene (10) auf dem feststehenden Teil aufsitzt. Falls gewünscht, kann nun noch eine geringe Menge an Brätmasse über die höherliegende Oberkante (12) des nun geschlossenen Vorratsbehälters (3) eingefüllt werden. Hierzu ist zwar die Überwindung einer etwas größeren Füllhöhe erforderlich, was jedoch deshalb keine Schwierigkeiten bereitet, weil die Hauptmasse des abzufüllenden Brätes bereits über die tieferliegende Einfüllkante (11) bei geöffnetem Aufsatz (5) eingefüllt werden konnte.

Die Höhe ($h_2$) (vgl. Figur 1), gemessen zwischen der Wirkebene (T) des Transportorganes (4) und der Oberkante (12) des Vorratsbehälters ist dabei so bemessen, daß es für eine Bedienungsperson unmöglich ist, selbst bei vollständigem Übergreifen der Oberkante bis zum Sitz des Transportorgans zu fassen.

Auf diese Art und Weise kann also der Vorratsbehälter oben offen bleiben und unter Einhaltung aller diesbezüglichen Sicherheitsbestimmungen auch während des Betriebs auf- oder auch nachgefüllt werden.

Die erfindungsgemäße Lösung stellt sicher, daß immer dann, wenn die von einer Bedienungsperson zu überwindende Höhe bzw. der Abstand zum Transportorgan so klein ist, beispielsweise die Höhe ($h_1$) in Figur 1, automatisch die Maschine abgeschaltet ist.

Die erfindungsgemäße Maschine hat somit zusammenfassend die Vorteile, daß sie zum einen ein großes Vorratsbehältervolumen zur Verfügung stellt, so daß kontinuierlich große Füllmengen verarbeitet werden können. Trotz des großen erzielbaren Volumens liegt die Handlingshöhe für das Befüllen oder für das Reinigen jedoch so tief, daß diese Vorgänge bequem und in einfacher Weise von einer Bedienungsperson durchgeführt werden können. Darüber hinaus erfüllt die Maschine ohne Gitter oder ähnliche Absicherung auf der Öffnungsseite des Vorratsbehälters die einschlägigen Sicherheitsbestimmungen. Insbesondere kann daher der Trichter auch während des Betriebs der Maschine nachgefüllt werden, ohne daß die Sicherheitseinrichtung dies behindern würde. Schließlich kann der Vorratsbehälter um einen Sichtspalt ohne Auslösen der Sicherheitsabschaltung geöffnet werden, so daß beispielsweise zur Füllstand überprüfung beim Leerfüllen die freie Einsicht in den Vorratsbehälter bequem möglich ist.

Der Trichteraufsatz verhindert auch, daß Brät während des Zuführens über den Trichterrand fällt.

## Patentansprüche

1. Maschine zum Füllen von Behältern oder Därmen mit Wurstbrät, mit einem Hauptmaschinenteil (2), in dem eine Ausstoßeinrichtung angeordnet ist, mit einem auf dem Hauptmaschinenteil angeordneten Vorratsbehälter (3) und mit einem Transportorgan (4), das das Brät aus dem Vorratsbehälter zur Ausstoßeinrichtung fördert, dadurch **gekennzeichnet**, daß die Vorratsbehälterwand im oberen Teil des Vorratsbehälters (3) zumindest teilweise von einem wegschwenkbaren Wandteil (5) gebildet wird, wobei eine tieferliegende Befüllkante entsteht.

2. Maschine nach Anspruch 1, dadurch **gekennzeichnet**, daß der wegschwenkbare Wandteil als Aufsatz (5) ausgebildet ist, der einen feststehenden Teil (6) des Vorratsbehälters (3) nach oben fortsetzt und gegenüber dem feststehenden Teil (6) hochschwenkbar gelagert ist.

3. Maschine nach Anspruch 2, dadurch **gekennzeichnet**, daß der feststehende Teil (6) zumindest teilweise trichterförmig und der Aufsatz (5) zylindrisch ausgebildet ist.

4. Maschine nach Anspruch 2 oder 3, dadurch **gekennzeichnet**, daß der feststehende Teil (6) nach oben hin in einem zylindrischen Ansatz (6b) endet.

5. Maschine nach einem der Ansprüche 2 bis 4, dadurch **gekennzeichnet**, daß der Aufsatz (5) am feststehenden Teil (6) über ein Einzelgelenk (9) hochschwenkbar gelagert ist.

6. Maschine nach Anspruch 5, dadurch **gekennzeichnet**, daß die Aufsatzunterkante und die Oberkante des feststehenden Teiles (6) korrespondierend derart schrägverlaufend ausgebildet sind, daß die Sitzebene (10) des Aufsatzes (5) auf dem feststehenden Teil (6) zum Gelenk (9) hin ansteigt.

7. Maschine nach Anspruch 5 oder 6, dadurch **gekennzeichnet**, daß im Gelenk (9) eine Freilaufrollkupplung vorgesehen ist.

8. Maschine nach einem der Ansprüche 2 bis 7, dadurch **gekennzeichnet**, daß am Vorratsbehälter (3) ein Sicherheitsschalter (14) zum Abschalten des Antriebsmotors der Maschine beim Hochschwenken des Aufsatzes (5) angeordnet ist.

9. Maschine nach Anspruch 8, dadurch **gekennzeichnet**, daß der Sicherheitsschalter (14) so angeordnet ist, daß er erst anspricht, wenn der beim Hochschwenken des Aufsatzes (5) entstehende Öffnungsspalt (hs) größer als ca. 5 bis 6 cm ist.

## Claims

1. Machine for filling containers or skins with sausage meat, having a main machine part (2), in which a discharge device is arranged, having a hopper (3) arranged on the main machine part, and having a transport element (4) which conveys the sausage meat out of the hopper to the discharge device, characterized in that, in the upper part of the hopper (3), the hopper wall is at least partially formed by a wall part (5) which can be swivelled away, giving rise to a lower filling edge.

2. Machine according to Claim 1, characterized in that the wall part which can be swivelled away is designed as a cowl (5), which continues a fixed part (6) of the hopper (3) upwards and is mounted in such a way that it can be swivelled up relative to the fixed part (6).

3. Machine according to Claim 2, characterized in that the fixed part (6) is at least partially funnel shaped and the cowl (5) is of cylindrical design.

4. Machine according to Claim 2 or 3, characterized in that the fixed part (6) ends towards the top in a cylindrical extension (6b).

5. Machine according to one of Claims 2 to 4, characterized in that the cowl (5) is mounted on the fixed part (6) via a single hinge (9) in such a way that it can be swivelled up.

6. Machine according to Claim 5, characterized in that the lower edge of the cowl and the upper edge of the fixed part (6) extend obliquely in corresponding fashion in such a way that the seating plane (10) of the cowl (5) on the fixed part (6) rises towards the hinge (9).

7. Machine according to Claim 5 or 6, characterized in that a roller free-wheeling clutch is provided in the hinge (9).

8. Machine according to one of Claims 2 to 7, characterized in that a safety switch (14) is arranged on the hopper (3) for the purpose of switching off the drive motor of the machine when the cowl (5) is swivelled up.

9. Machine according to Claim 8, characterized in that the safety switch (14) is arranged in such a way that it only responds when the opening gap (hs) which arises when the cowl (5) is swivelled up is greater than about 5 to 6 cm.

## Revendications

1. Machine pour bourrer des récipients ou des boyaux avec de la chair à saucisses, comprenant une section de machine principale (2) dans laquelle est monté un dispositif d'expulsion, un réservoir (3) monté sur la section de machine principale et un organe de transport (4) qui amène la chair à saucisses du réservoir au dispositif d'expulsion, caractérisée en ce que la paroi du réservoir est constituée au moins partiellement dans la partie supérieure du réservoir (3) par un élément de paroi (5) pivotant, avec formation d'un bord de remplissage situé plus bas.

2. Machine selon la revendication 1, caractérisée en ce que l'élément de paroi pivotant est conformé en chapeau (5) qui prolonge vers le haut une partie fixe (6) du réservoir (3) et peut être basculé vers le haut par rapport à la partie fixe (6).

3. Machine selon la revendication 2, caractérisée en ce que la partie fixe (6) est conformée au moins partiellement en entonnoir et que le chapeau (5) présente une forme cylindrique.

4. Machine selon l'une des revendications 2 ou 3, caractérisée en ce que la partie fixe (6) se termine en haut par une section cylindrique (6b).

5. Machine selon l'une des revendications 2 à 4, caractérisée en ce que le chapeau (5) est monté sur la partie fixe (6) par l'intermédiaire d'une articulation individuelle (9) de façon à pouvoir être basculé vers le haut.

6. Machine selon la revendication 5, caractérisée en ce que le bord inférieur du chapeau et le bord supérieur de la partie fixe (6) sont inclinés de manière correspondante, de sorte que le plan d'assise (10) du chapeau (5) monte sur la partie fixe (6) en direction de l'articulation (9).

7. Machine selon l'une des revendications 5 ou 6, caractérisée en ce que dans l'articulation (9) est prévu un accouplement roulant à roue libre.

8. Machine selon l'une des revendications 2 à 7, caractérisée en ce que sur le réservoir (3) est disposé un coupe-circuit (14) pour arrêter le moteur de la machine lors du relèvement du chapeau (5).

9. Machine selon la revendication 8, caractérisée en ce que le coupe-circuit (14) est disposé de telle façon qu'il ne répond que lorsque la largeur de la fente d'ouverture (hs) apparaissant lors du relèvement du chapeau (5) est plus grande qu'environ 5 à 6 cm.

FIG.1

FIG. 2

FIG.3

FIG.4